# EUROPEAN PATENT SPECIFICATION

(11) **EP 4 162 790 B1**
(45) Date of publication and mention of the grant of the patent: **28.01.2026**
(21) Application number: 22200339.4
(22) Date of filing: 07.10.2022
(51) Int. Cl.: A01F 25/20, A01K 5/00

(54) **PROCESS FOR CUTTING A FORAGE FOR ANIMAL FEED**
VERFAHREN ZUM SCHNEIDEN VON FUTTER FÜR TIERFUTTER
PROCÉDÉ DE DÉCOUPE D'UN FOURRAGE POUR L'ALIMENTATION ANIMALE

(30) Priority: 07.10.2021 IT 202100025703
(43) Date of publication of application: 12.04.2023
(73) Proprietor: Faresin Industries S.p.A., 36042 Breganze VI (IT)
(72) Inventor: FARESIN, Sante, 36042 Breganze (VI) (IT); FARESIN, Giulia, 36042 Breganze (VI) (IT); SECCO, Claudio, 36042 Breganze (VI) (IT); ANDRIGHETTO, Igino, 36100 Strada del Pasubio, 465 (VI) (IT); SERVA, Lorenzo, 35030 Rubano (PD) (IT); MAGRIN, Luisa, 35010 Villa del Conte (PD) (IT); MARCHESINI, Giorgio, 36050 Bolzano Vicentino (VI) (IT); PEZZUOLO, Andrea, 45020 Villanova del Ghebbo (RO) (IT); SARTORI, Luigi, 35141 Padova (IT)
(74) Representative: Gallo, Luca

(56) References cited:
- DE-A1- 102017 104 008
- DE-B3- 102012 207 591
- SPIEKERS HUBERT ET AL: "H�cksell�nge und Strukturwert von Silomais - Chopping length and structure value of silage maize", OPTIMIERUNG DES FUTTERWERTES VON MAIS UND MAISPRODUKTEN, SONDERHEFT 331, 31 December 2009 (2009-12-31), pages 47 - 62, XP055917205, ISBN: 978-3-86576-057-9, Retrieved from the Internet <URL:https://literatur.thuenen.de/digbib_extern/bitv/dk042632.pdf> [retrieved on 20220502]
- D.R MERTENS: "Creating a System for Meeting the Fiber Requirements of Dairy Cows", JOURNAL OF DAIRY SCIENCE, 1 July 1997 (1997-07-01), UNITED STATES, pages 1463 - 1481, XP055128181, Retrieved from the Internet <URL:http://www.sciencedirect.com/science/article/pii/S0022030297760752> DOI: 10.3168/jds.S0022-0302(97)76075-2

## Description

### Field of application

The present invention refers to a process for cutting a forage for animal feed according to the preamble of the independent claim.

The present process is inserted in the field of zootechny and is advantageously intended to be employed, for example by food suppliers, formula technicians or stable/stall/barn veterinarians, in intensive animal farms, such as cows, pigs, goats, sheep, buffaloes, etcetera.

In particular, the process for cutting a forage, object of the present invention, is particularly indicated for selecting the length at which the fibers of the forage are to be cut, in order to optimize the metabolic function of the animals to whom the latter is distributed.

In addition, the process for cutting a forage, object of the present invention, is advantageously intended to be used for reducing the length of the fibrous fraction of the forage in accordance with the predetermined cutting length and advantageously to control the effectiveness of the cutting operation.

### State of the art

Intensive (or industrial) animal farms are generally situated in stables/stalls normally provided with one or more corridors, along the sides of which the animal feeders are placed.

In the stables/stalls of intensive (or industrial) animal farms, the animals are generally fed with a food product (in the jargon of the field termed unifeed or TMR (Total Mixed Ratio)) constituted by a mixture of foods, such as forages (like corn, sorghum, etc.) and concentrated foods (such as soy grain, corn grain, etc.).

The feeding of the animals by means of the aforesaid mixture allows the simultaneous administration of all the nutritional elements that allows maximizing the production efficiency, reducing to the minimum the risk of onset of dysmetabolic diseases. For such purpose, there are many guidelines dictated by scientific research, which propose maximizing the production, decreasing waste and preserving the animal wellbeing, through the balanced supply of nutritional elements.

For example, in the specific case of the Italian zootechnical production field, the milk industry is characterized by a form of rationing of the cows that places particular attention on the ratio between forages and concentrates. In accordance with the production regulations of Parmigiano Reggiano and Grana Padano (The Parmigiano Reggiano Cheese Consortium. 2018. PARMIGIANO REGGIANO. European Union: Official Journal of the European Union; The Consorzio Tutela Grana Padano. 2019. GRANA PADANO. European Union: Official Journal of the European Union), the use of forages has a fixed minimum limit equal to 50% of the foods administrated in the diet.

Therefore, the use of forages in the diet, especially for those local production, has significant environmental value, has an economic and social impact (Martin N.P., Russelle M.P., Powell J.M., Sniffen C.J., Smith S.I., Tricarico J.M., Grant R.J. 2017. Invited review: Sustainable forage and grain crop production for the US dairy industry. Journal of Dairy Science. 100(12):9479-9494. doi:10.3168/jds.2017-13080; Tabacco E., Comino L., Borreani G. 2018.

Production efficiency, costs and environmental impacts of conventional and dynamic forage systems for dairy farms in Italy. European Journal of Agronomy. 99(June):1-12. doi:10.1016/j.eja.2018.06004; Zucali M., Bacenetti J., Tamburini A., Nonini L., Sandrucci A., Bava L. 2018. Environmental impact assessment of different cropping systems of home-grown feed for milk production. Journal of Cleaner Production. 172:3734-3746. doi:10.1016/j.jclepro.2017.07.048) and enhances the commercial quality of the products introduced on the market.

In addition, from a standpoint of animal wellbeing and health, the use of forages in the diet plays an essential role for controlling the dysmetabolic forms, like rumen acidosis (Morgante M., Stelletta C., Berzaghi P., Gianesella M., Andrighetto I. 2007. Subacute rumen acidosis in lactating cows: an investigation in intensive Italian dairy herds. 91:226-234) which, as a final consequence, has strong repercussions on the production capacity of the cows.

In particular, the role of fiber for preventing dysmetabolic diseases can be attributed to its capacity of facilitating the ruminant activity and consequently facilitating greater salivation (Beauchemin K.A., Eriksen L., Nørgaard P., Rode L.M. 2008. Short Communication: Salivary Secretion During Meals in Lactating Dairy Cattle. Journal of Dairy Science. 91(5):2077-2081. doi:10.3168/jds.2007-0726), with beneficial effects on the control of the production of the milk fat, of food ingestion, of the digestibility of the fiber, and with decrease of diarrhea, laminitis and other diseases.

On such matter, the physical efficiency factor is known in the field - "pef" (Mertens D.R. 1997. Creating a System for Meeting the Fiber Requirements of Dairy Cows. Journal of Dairy Science. 80(7):1463-1481. doi:10.3168/jds.S0022-0302(97)76075-2), which takes under consideration the mechanical action that the fiber carries out for the stimulation of the ruminant activity. In particular, in order to estimate the value of pef, it is known to use the Penn State Particle Separator (Kononoff P.J., Heinrichs A.J., Buckmaster D.R. 2003. Modification of the Penn State Forage and Total Mixed Ration Particle Separator and the Effects of Moisture Content on its Measurements. Journal of Dairy Science. 86(5):1858-1863. doi:10.3168/jds.S0022-0302(03)73773-4). The physical efficiency factor generally increases with the increase of the fiber length.

In the zootechny field, chemical analyses are also known that are based on the use of neutral and acidic detergents, proposed by Van Soest (Van Soest P.J. 1967. Development of a Comprehensive System of Feed Analyses and its Application to Forages. Journal of Animal Science. 26(1):119-128. doi:10.2527/jas1967.261119x; Van Soest P.J., Robertson J.B., Lewis B.A. 1991. Methods for Dietary Fiber, Neutral Detergent Fiber, and Nonstarch Polysaccharides in Relation to Animal Nutrition. Journal of Dairy Science. 74(10):3583-3597. doi:10.3168/jds.S0022-0302(91)78551-2), which have revolutionized the nutrition principles of the ruminants, facilitating an improved definition of the fiber quality (aNDF: neutral detergent resistant fiber) and above all of the ratios between the different components (hemicellulose, cellulose, and lignin).

The lignin and the ratio aNDF/lignin are normally indicated as estimators of the indigestible fiber fraction (Besle J.-M., Cornu A, Jouany J.-P. 1994. Roles of structural phenylpropanoids in forage cell wall digestion. Journal of the Science of Food and Agriculture. 64(2):171-190. doi:10.1002/jsfa.2740640206; Jung H.G., Allen M.S. 1995. Characteristics of plant cell walls affecting intake and digestibility of forages by ruminants. Journal of Animal Science. 73(9):2774-2790. doi:10.2527/1995.7392774x; Gallo A., Fustini M., Canestrari G., Formigoni A. 2016. Estimation of the indigestible fiber in different forage types Estimation of the indigestible fiber in different forage types. Journal of Animal Science. 94(1):1-7. doi:https://doi.org/10.2527/jas.2015-9649). Commonly, the indigestible fiber fraction is also measured as the fiber amount (aNDF) not degraded after 240 hours of in vitro incubation (Tilley J.M.A., Terry R.A. 1963. A two-stage technique for the in vitro digestion of forage crops. Grass and Forage Science. 18(2):104-111. doi:10.1111/j.1365-2494.1963.tb00335.x; Allen M.S., Mertens D.R. 1988. Evaluating Constraints on Fiber Digestion by Rumen Microbes. Journal of Nutrition. 118(2):261-270. doi:10.1093/jn/118.2.261; Van Soest PJ. 1994. Nutritional Ecology of the Ruminant. 2nd ed. Cornell University Press, editor. Ithaca; Raffrenato E., Ross D.A., Van Amburgh M.E. 2018. Development of an in vitro method to determine rumen undigested aNDFom for use in feed evaluation. Journal of Dairy Science. 101(11):9888-9900. doi:10.3168/jds.2018-15101). Generally, the digestibility of the fiber increases with the decrease of its length.

Therefore, if on one hand ensuring a minimum value of length and quantity of the fiber in the food is essential in controlling the dysmetabolic diseases, on the other hand an excessive value reduces the ingestion (and digestion) capacity thereof due to the greater physical bulk of the food (Mertens D.R. 1987. Predicting Intake and Digestibility Using Mathematical Models of Ruminal Function. Journal of Animal Science. 64(5):1548-1558. doi:10.2527/jas1987.6451548x; Dado R. G., S. A.M. 1995. Intake Limitations, Feeding Behavior, and Rumen Function of CowsChallenged with Rumen Fill from Dietary Fiber or Inert Bulk. Journal of Dairy Science. 78(29):118-133. doi:10.3168/jds.S0022-0302(95)76622-X).

Hence, known in the field is a process for cutting in order to obtain a forage cut to a desired length.

In particular, such process first of all provides for a loading step in which the forage is loaded into a cutting apparatus, for example a mixer wagon provided with mixing screws in turn comprising blades for cutting the forage. Subsequently, the process provides for a step of mixing and cutting, in which the screws of the mixer wagon are rotated in order to mix the forage and simultaneously reduce the dimensions of the fiber.

In order to increase the digestibility of the fiber, the commonly employed process provides for the previous reduction of the length of the fiber. Therefore, the step of mixing and cutting is generally prolonged for a time comprised between 10 and 60 minutes in order to obtain cut forage of reduced length.

In addition, during such step of mixing and cutting, portions of forage are sampled and tested in order to evaluate the value of pef and check that the fiber is also provided with a length suitable for ensuring a sufficient stimulation of the ruminant activity.

The above-described process of known type has in practice shown that it does not lack drawbacks.

The main drawback of such process lies in the fact that it is not adaptable to the type and quality of the forage. Indeed, taking under consideration in practice only the value of pef, the selection of the length of the forage is only oriented to ensure sufficient physical and mechanical characteristics, but not those from the digestibility standpoint.

A further drawback of the process of known type lies in the fact that the waste of energy used for cutting the forage is in most cases excessive and not necessary, since the digestibility of a forage is variable and not controllable by means of only pef analysis.

Indeed, from the results of a research (not published) carried out by the proponents of the present patent, it emerged that by reducing the length of the fiber, exploiting the mechanical cutting action of the mixer wagon in accordance with two different cutting times respectively equal to 10 minutes and to 60 minutes, the food ingestion increases (in terms of dry substance mass), without any significant variation of the milk production and consequently with a worsening of the food efficiency.

In addition, it emerged from the research that the cows fed with the forage processed for a greater time period (hence with smaller length) dedicate less time to eating, have a greater ingestion speed and have a lower mastication per ingested dry substance mass.

A process is also known in the field (in particular from the article *"*Hacksellange und Strukturwert von Silomais - Chopping length and structure value of silage maize", Optimierung des Futterwertes von Mais und Maisprodukten, Sonderheft 331, by Spiekers Hubert et al.) that provides for determining, for a food mixture based on corn silage, an overall structural parameter associated with the raw fiber contained in the mixture. In addition, the process provides for determining a theoretical cutting length based on the comparison of such structural parameter with a fixed threshold value equal to 1.2 and in particular for cutting the components of the mixture with greater length in the event in which the structural parameter is lower than the fixed threshold value.

Also such process has in practice shown that it does not lack drawbacks, since it does not allow being applied to each type of animal food, but only to mixtures with high prevalence of corn silage.

A further drawback lies in the fact that such process does not allow obtaining sufficiently accurate results of optimal lengths, since it does not take under consideration the actual amount of each component in the mixture.

A further drawback lies in the fact that such process does not allow obtaining a high food efficiency, since it does not account for the possible variability over time of the characteristics of the same foods of the mixture, taken separately.

### Presentation of the invention

The present invention provides a process for cutting a forage for animal feed as defined by appended claim 1. Preferred aspects are defined by the dependent claims.

The main object of the present invention is therefore that of overcoming the drawbacks manifested by the solutions of known type, by providing a process for cutting a forage for animal feed, which allows obtaining a length of the forage that is optimal for the animal needs.

Another object of the present invention is to provide a process for cutting a forage for animal feed, which allows being adapted to forages with different characteristics.

Another object of the present invention is to provide a process for cutting a forage for animal feed, which allows taking under consideration both the digestibility of the forage and its capacity to stimulate ruminant activity. Another object of the present invention is to provide a process for cutting a forage for animal feed, which allows decreasing the energy waste tied to cutting the forage.

Another object of the present invention is to provide a process for cutting a forage for animal feed, which allows being automated and controlling, in a feedback manner, the processed forage.

Another object of the present invention is to provide a process for cutting a forage for animal feed that is simple and inexpensive to implement.

### Brief description of the drawings

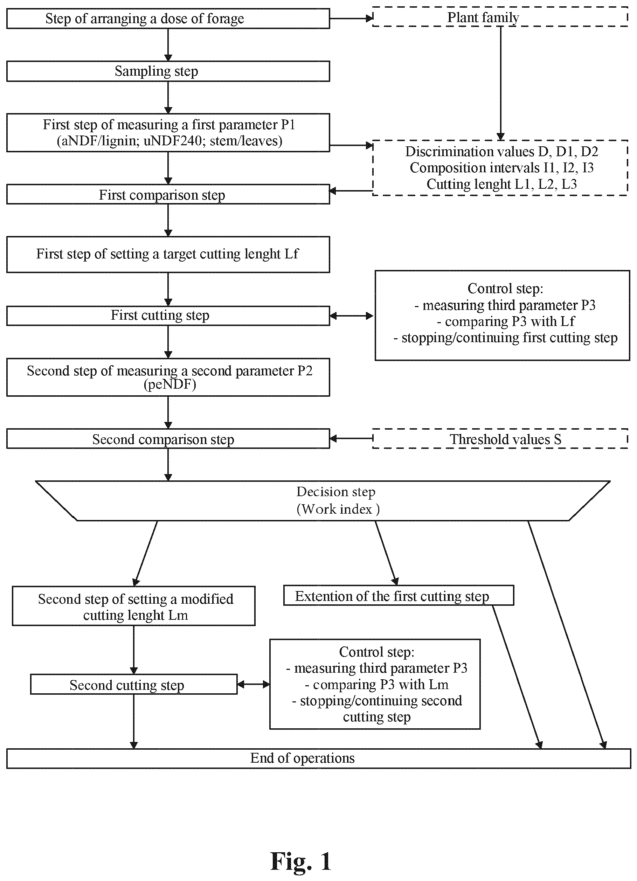

The technical characteristics of the invention, according to the aforesaid objects, can be clearly seen from the contents of the below-reported claims and the advantages thereof will be more evident from the following detailed description, made with reference to figure 1 which represents a flow diagram relative to a merely exemplifying and non-limiting embodiment of the process for cutting a forage, object of the present invention.

### Detailed description of a preferred embodiment

The present process for cutting a forage for animal feed is intended to be advantageously employed in intensive animal farming in order to determine the optimal length at which a forage is to be cut that is present in a food product distributed to farm animals, such as meat or milk cows, pigs, goats, sheep, buffaloes, etcetera. In addition, the process for cutting a forage is intended to be advantageously employed for grinding the forage to the length suitable for optimizing the digestibility thereof and the stimulation of the ruminant activity. The food product intended to be distributed to animals (termed in the jargon of the field unifeed or Total Mixed Ratio (TMR)) normally comprises a mixture of solid bodies (for example in the form of ground plants and/or granules) of multiple foods. In particular, the mixture of the food product comprises forages (such as corn, sorghum, etc.) and concentrated foods which for example contain protein components (such as soy grain) and/or energy components (such as corn grain). With the term "forage" it is therefore intended a food for farm livestock for productive purposes and comprising a vegetative part of a plant intended, possibly also after suitable transformations, to feed the aforesaid livestock. Advantageously, the forage can be, in a per se known manner, in the green state, dried or silage. The forage can therefore advantageously comprise green forages (not dried), in particular obtained from meadows, pastures or herbage, hays (dried naturally or artificially, or dehydrated), or silages (obtained via silage treatment of known type), in particular green or semi-dried silages.

The process for cutting a forage for animal feed, object of the present invention, comprises a step of arranging at least one dose of forage belonging to a plant family. In particular, the plant family is one between leguminous and gramineous.

Advantageously, the dose of forage can be arranged on its own or in mixture in the food product. In particular, the dose of forage can be arranged in silos, in one or more storage bales, in a collection conveyor, in a containment bed of a cutting and/or processing machine, e.g. a mill or a mixer wagon.

In particular, in addition, the dose of forage can be arranged in the green state, dried or silage.

Of course, without departing from the protective scope of the present invention, in the arrangement step, multiple doses of forage (equivalent or different) can be arranged. In such case, the process can be executed on each dose of forage or on a mixture of the doses of forage. In accordance with such embodiment variant, each dose of forage belongs to a corresponding plant family. Preferably, the doses of forage belong to plant families that are different from each other.

In particular, the plant family is associated with at least one predetermined discrimination value D, which defines at least one first composition interval I1, e.g. for values at least lower than the discrimination value D, with at least one predetermined first cutting length L1 associated therewith. In addition, the discrimination value D defines at least one second composition interval I2, e.g. for values at least greater than the discrimination value D, with at least one predetermined second cutting length L2 associated therewith.

With the expressions "first composition interval" and "second composition interval", it will be intended both numerical sets comprising a plurality of number values, and numerical sets constituted by only one number value, e.g. constituted by the same discrimination value D. For example, once a discrimination value D is defined, the latter can identify a first interval I1 comprising number values lower than the aforesaid discrimination value D, a second interval I2 comprising number values greater than the aforesaid discrimination value D and a third interval I3 comprising only one number value equal to the discrimination value D itself.

Preferably, in the case of three composition intervals I1, I2, I3, these are adapted to be associated with a respective first, second and third cutting length L1, L2, L3. Of course, without departing from the protective scope of the present invention, two or more discrimination values D can be provided for, which define three or more composition intervals.

The discrimination values, the composition intervals and the cutting lengths will be described more in detail below.

According to the invention, the process for cutting a forage also comprises a first step of measuring the dose of forage in order to determine a first parameter P1 indicative of the quantity of indigestible fiber contained in the dose of forage. Advantageously, the first parameter P1 in the first measurement step is selected from among: ratio between alpha-amylase-treated neutral detergent fiber (aNDF) fraction and lignin fraction contained in said dose of forage; 240 hours undigested neutral detergent fiber (uNDF240) fraction in said dose of forage; leaf-to-stem ratio of said dose of forage; and combinations thereof.

Of course, without departing from the protective scope of the present invention, the first parameter P1 can be selected from among other values equivalent to those indicated above. For example, the alpha-amylase-treated neutral detergent fiber (aNDF) fraction can be equivalently substituted by the ash-free neutral detergent fiber (aNDFom) fraction. In addition, the lignin fraction can be equivalently substituted by acid attack resistant fiber (or acid detergent lignin, ADL) fraction, or by lignin fraction resistant to alkaline solution attack (in particular potassium permanganate). In addition, the 240 hours undigested neutral detergent fiber (uNDF240) fraction can be equivalently substituted by undigested neutral detergent fiber fraction for another pre-established time period (uNDFxyz, where "xyz" is a number of pre-established hours).

Advantageously, the first parameter P1 is obtained with methods that are per se known to the man skilled in the art. For example, the alpha-amylase-treated neutral detergent fiber (aNDF) fraction and the lignin fraction are in particular obtained with the method of Van Soest (Van Soest P.J. 1967. Development of a Comprehensive System of Feed Analyses and its Application to Forages. Journal of Animal Science. 26(1):119-128. doi:10.2527/jas1967.261119x; Van Soest P.J., Robertson J.B., Lewis B.A. 1991. Methods for Dietary Fiber, Neutral Detergent Fiber, and Nonstarch Polysaccharides in Relation to Animal Nutrition. Journal of Dairy Science. 74(10):3583-3597. doi:10.3168/jds.S0022-0302(91)78551-2). In addition, the 240 hours undigested neutral detergent fiber (uNDF240) fraction is in particular obtained with at least one of the methods described in Tilley J.M.A., Terry R.A. 1963. A two-stage technique for the in vitro digestion of forage crops. Grass and Forage Science. 18(2):104-111. doi:10.1111/j.1365-2494.1963.tb00335.x; in Allen M.S., Mertens D.R. 1988. Evaluating Constraints on Fiber Digestion by Rumen Microbes. Journal of Nutrition. 118(2):261-270. doi:10.1093/jn/118.2.261; in Van Soest PJ. 1994. Nutritional Ecology of the Ruminant. 2nd ed. Cornell University Press, editor. Ithaca; and in Raffrenato E., Ross D.A., Van Amburgh M.E. 2018. Development of an in vitro method to determine rumen undigested aNDFom for use in feed evaluation. Journal of Dairy Science. 101(11):9888-9900. doi:10.3168/jds.2018-15101.

In accordance with a particularly advantageously embodiment variant of the present invention, the aforesaid first parameter P1 is obtained by means of a NIR spectrometer operating the near infrared spectrum, suitably adjusted and calibrated.

In particular, in accordance with the latter embodiment the aforesaid first parameter P1 obtained during the first measurement step of the present process is obtained as an estimate obtained by means of NIR spectroscopy techniques. Advantageously, the process also comprises a forage sampling step, preferably provided for before the first measurement step, in which at least one forage sample is identified and/or picked up from the dose of forage. In particular, the first measurement step is executed on the forage sample picked up in the previous sampling step.

Preferably, in the forage sampling step, a plurality of forage samples is identified and/or picked up. In particular, the first measurement step is executed on each forage sample of the plurality of forage samples.

In the event in which multiple doses of forage are arranged, in the sampling step at least one forage sample is advantageously identified and/or picked up from each of the doses of forage.

According to the invention, the process for cutting a forage also comprises a first step of comparing the first parameter P1 with the predetermined discrimination value D.

Advantageously, as indicated above, the discrimination value D of the first comparison step depends on the plant family of the dose of forage. In addition, advantageously, the discrimination value D also depends on the first parameter P1 selected in the first measurement step.

In the first comparison step, with the first parameter P1 in the first composition interval I1, the first cutting length L1 is selected; and with the first parameter P1 in the second composition interval I2, the second cutting length L2 is selected.

In accordance with a first embodiment variant of the invention, the plant family of the dose of forage is leguminous. In such case, the first cutting length L1 is at least smaller than 30 mm and the second cutting length L2 is at least greater than 30 mm. In particular, in the case of three composition intervals I1, I2, I3, the first cutting length L1 is smaller than 30 mm, the second cutting length L2 is greater than 30 mm and the third cutting length L3 is equal to 30 mm.

In accordance with a second embodiment variant of the invention, the plant family of the dose of forage is gramineous. In such case the first cutting length L1 is at least smaller than 35 mm and said second cutting length L2 is at least greater than 35 mm. In particular, in the case of three composition intervals I1, I2, I3, the first cutting length L1 is smaller than 35 mm, the second cutting length L2 is greater than 35 mm and the third cutting length L3 is equal to 35 mm.

In accordance with a first embodiment, the first parameter P1 determined in the first measurement step is the ratio between alpha-amylase-treated neutral detergent fiber (aNDF) fraction and lignin fraction contained in the dose of forage. In this first embodiment, in particular, the discrimination value D is equal to 5 if the dose of forage belongs to the leguminous family. In addition, advantageously the discrimination value D is equal to 10 if the dose of forage belongs to the gramineous family.

Advantageously, the discrimination value D identifies a first composition interval I1 comprising number values lower than the aforesaid discrimination value D (i.e. smaller than 5 or 10), a second composition interval I2 comprising number values greater than the aforesaid discrimination value D (i.e. greater than 5 or 10) and a third composition interval I3 comprising only one number value equal to the discrimination value D itself (i.e. equal to 5 or 10).

In accordance with a second embodiment, the first parameter P1 determined in the first measurement step is 240 hours undigested neutral detergent fiber (uNDF240) fraction contained in the dose of forage. In this second embodiment, in particular, the at least one discrimination value D comprises a first discrimination value D1 equal to 30% and a second discrimination value D2 equal to 24% if the dose of forage belongs to the leguminous family. In addition, advantageously the first discrimination value D1 is equal to 22% and the second discrimination value D2 is equal to 17% if the dose of forage belongs to the gramineous family.

Advantageously, the first and second discrimination values D1, D2 identify a first composition interval I1 comprising number values greater than or equal to the aforesaid first discrimination value D1 (i.e. greater than or equal to 30% or 22%), a second composition interval I2 comprising number values smaller than or equal to the aforesaid second discrimination value D2 (i.e. smaller than or equal to 24% or 17%) and a third composition interval I3 comprising number values comprised between the first and the second discrimination value D1, D2 (i.e. comprised between 30% and 24% or between 22% and 17%).

In accordance with a third embodiment, the first parameter P1 determined in the first measurement step is the leaf-to-stem ratio of the dose of forage, advantageously expressed in percentage. In this third embodiment, in particular the at least one discrimination value D comprises a first discrimination value D1 equal to 70% and a second discrimination value D2 equal to 50% if the dose of forage belongs to the leguminous family. In addition, advantageously the first discrimination value D1 equal to 80% and the second discrimination value D2 is equal to 60% if the dose of forage belongs to the gramineous family. Advantageously, the first and second discrimination values D1, D2 identify a first composition interval I1 comprising number values greater than or equal to the aforesaid first discrimination value D1 (i.e. greater than or equal to 70% or 80%), a second composition interval I2 comprising number values smaller than or equal to the aforesaid second discrimination value D2 (i.e. smaller than or equal to 50% or 60%) and a third composition interval I3 comprising number values comprised between the first and the second discrimination value D1, D2 (i.e. comprised between 70% and 50% or between 80% and 60%).

In all the embodiments, the first composition interval I1 is adapted to be associated with the first cutting length L2, the second composition interval I2 is adapted to be associated with the second cutting length L2 and the third composition interval I3 is adapted to be associated with the third cutting length L3 indicated above in the first and second embodiment variants.

The composition intervals I1, I2, I3 and the cutting lengths L1, L2, L3 of the embodiments are summarized in table 1.

**Table 1 - Embodiments**

| Family of plants | Leguminous | | | Gramineous | | |
|---|---|---|---|---|---|---|
| Composition interval | 1° interval | 2° interval | 3° interval | 1° interval | 2° interval | 3° interval |
| 1° embodiment (aNDF/lignin) | < 5 | > 5 | = 5 | < 10 | > 10 | = 10 |
| 2° embodiment (uNDF240) | ≥ 30% | ≤ 24% | > 24% < 30% | ≥ 22% | ≤ 17% | **>** 17% < 22% |
| 3° embodiment (stem/leaves) | ≥ 70% | ≤ 50% | > 50% < 70% | ≥ 80% | ≤ 60% | > 60% < 80% |
| Cutting length | < 30 mm | > 30 mm | = 30 mm | < 35 mm | > 35 mm | = 35 mm |

According to the invention, the process also comprises a first step of setting a target cutting length Lf in a cutting apparatus. In particular, the target cutting length Lf is determined as a function of at least one between the first cutting length L1 and the second cutting length L2, and advantageously also the third cutting length L3, selected in the first comparison step.

In this manner, the strategy in the selection of the correct cutting length of the fibrous fraction of the diet (forages) is advantageously carried out based on the intrinsic characteristics (chemical composition of the fiber, aNDF) and on its digestibility (uNDF240, simulated by the ratio aNDF/lignin) in order to maximize the mechanical function with regard to the ingestion of the food, i.e. to its digestibility.

More in detail, the target cutting length Lf can be equal to one between at least the first and second cutting lengths L1, L2, and advantageously also the third cutting length L3, or it can be calculated based on the latter, in particular if the first measurement step and the first comparison step are executed many times, selecting different first parameters P1.

In accordance with a first embodiment of the process, the first measurement step provides for the calculation of only one first parameter P1. In such case, the first comparison step advantageously provides for comparing the first parameter P1 with one or more discrimination values D in order to determine the composition interval I1, I2, I3 in which the first parameter P1 itself falls. In addition, the first comparison step advantageously provides for selecting only one cutting length L1, L2, L3, relative to the composition interval I1, I2, I3 in which the first parameter P1 falls.

In addition, in accordance with the first embodiment of the process, in the first setting step a value of target cutting length Lf is set, which is equal at least to the cutting length L1, L2, L3 selected in the first comparison step.

In accordance with a second embodiment of the process, a sampling step as described above is provided for, in which a plurality of forage samples is identified and/or picked up from said dose of forage. In addition, the first measurement step and the first comparison step are advantageously executed on each forage sample of the plurality of forage samples in order to obtain a corresponding plurality of selected cutting lengths L1, L2, L3. In such case, the first comparison step advantageously provides for comparing the first parameter P1 of the corresponding forage sample with the discrimination value D in order to determine the composition interval I1, I2, I3 in which the relative first parameter P1 falls. In addition, the first comparison step advantageously provides for selecting the plurality of cutting lengths L1, L2, L3, each relative to the composition interval I1, I2, I3 in which the corresponding first parameter P1 falls.

In addition, in accordance with the second embodiment of the process, the target cutting length Lf is calculated as a statistical function of the plurality of selected cutting lengths L1, L2, L3. Advantageously, in the first setting step, a value of target cutting length Lf is set, which is equal to the value of cutting length that more frequently appears in the plurality of cutting lengths L1, L2, L3. Alternatively, in the first setting step, a value of target cutting length Lf is set, which is equal to the mean of the values of the plurality of cutting lengths L1, L2, L3. Of course, any suitable statistical function can be used for evaluating the target cutting length Lf.

In accordance with a third embodiment of the process, the first measurement step and the first comparison step are executed for a plurality of first parameters P1 in order to obtain a corresponding plurality of selected cutting lengths L1, L2, L3. In particular, the first measurement step provides for calculating multiple different first parameters P1. In such case, the first comparison step advantageously provides for comparing the first parameters P1 with the corresponding discrimination values D in order to determine the composition interval I1, I2, I3 in which the relative first parameter P1 falls. In addition, the first comparison step advantageously provides for selecting the plurality of cutting lengths L1, L2, L3, each relative to the composition interval I1, I2, I3 in which the corresponding first parameter P1 falls.

In addition, in accordance with the third embodiment of the process, the target cutting length Lf is calculated as a statistical function of the plurality of selected cutting lengths L1, L2, L3. Advantageously, in the first setting step, a value of target cutting length Lf is set, which is equal to the value of cutting length that more frequently appears in the plurality of cutting lengths L1, L2, L3. Alternatively, in the first setting step, a value of target cutting length Lf is set, which is equal to the mean of the values of the plurality of cutting lengths L1, L2, L3. Of course, any suitable statistical function can be used for evaluating the target cutting length Lf.

In this manner, due to the determination of a corresponding cutting length for each forage sample (of a same dose or of different doses) it is possible to increase the accuracy of the determination of the optimal target cutting length Lf, which advantageously accounts for both the variability of the forage characteristics at different points within a same dose of forage, and the variability of the forage characteristics in different doses of forage, in particular belonging to different plant families.

Indeed, generally the forage within the same dose of forage can have characteristics that are even quite different based, for example, on when it was collected, how much time it remained unused, on the silage period, on the point of the storage accumulation where it was picked up, etc. In the same manner, doses of forage belonging to different plant families have characteristics that are different from each other and therefore such characteristics can affect the cutting length in a different way.

Therefore, calculating the target cutting length Lf, based on the selected cutting lengths of each sample by means of a suitable statistical function, advantageously allows accounting for the contribution that each sample (and hence each dose of forage or portion thereof) gives to the entire food product.

Advantageously, the process also comprises a signaling step, in which the target cutting length Lf is communicated to an operator and/or to the cutting apparatus of the forage. For example, such process can be implemented in an automated system, in which the signaling step comprises the emission of an acoustic signal and/or a visual signal by the automated system itself in order to signal such target cutting length Lf to the operator. In addition, the signaling step can advantageously comprise the emission of a digital signal and/or an analog signal by the automated system itself in order to signal such target cutting length Lf to the cutting apparatus, which can automatically set it.

In particular, the cutting apparatus can for example be a forage-grinder mill or a mixer wagon, preferably provided with blades at variable distance from each other. Advantageously, in the first setting step the blades are set with a distance substantially equal to the selected target cutting length Lf.

The cutting process, object of the present invention, also provides for a first cutting step, in which the cutting apparatus is actuated with the dose of forage at its interior in order to obtain a dose of cut forage.

In this manner, the process allows controlling the cutting length of the forage based on the characteristics of ingestion and digestibility of the forage itself, even before its capacities for stimulating the ruminant activity. Therefore, it is possible to prevent excessively and inefficiently prolonging the first cutting step, saving energy and optimizing the properties of the forage.

Advantageously, the first cutting step is executed on a mixture of forages comprising multiple doses of forage.

Advantageously, for such purpose, the method comprises a mixing step in which the doses of forage are placed together and mixed together in order to form the aforesaid mixture of forages. Preferably, the mixing step can be executed before prima of the first cutting step, or simultaneously with the actuation of the first cutting step itself (e.g. in a mixer wagon provided with suitable mixing and cutting means).

Advantageously, the process for cutting also comprises a second step of measuring the dose of cut forage in order to determine a second parameter P2 indicative of the quantity of physically effective fiber in the dose of cut forage. Preferably, the second parameter P2 in the second measurement step is the physically effective fiber (peNDF) fraction of the dose of cut forage. In particular, the physically effective fiber (peNDF) fraction is calculated by means of the product between alpha-amylase-treated neutral detergent fiber (aNDF) fraction physical efficiency factor (pef). Advantageously, the second parameter P2 can be equivalently substituted by only the physical efficiency factor (pef) or by the mean length of the fiber.

In particular, the alpha-amylase-treated neutral detergent fiber (aNDF) fraction can be calculated as indicated above. Advantageously, in addition, in the second measurement step, the physical efficiency factor (pef) can be estimated by means of the calculation of the (dry substance) fiber fraction retained by meshes of a sieve with diameter of the holes of 1.18 mm. For example, in the second measurement step, a sieve can be used of type equivalent or similar to the Penn State Particle Separator (Kononoff P.J., Heinrichs A.J., Buckmaster D.R. 2003. Modification of the Penn State Forage and Total Mixed Ration Particle Separator and the Effects of Moisture Content on its Measurements. Journal of Dairy Science. 86(5):1858-1863. doi:10.3168/jds.S0022-0302(03)73773-4) and/or tabulated values of pef (Mertens D.R. 1997. Creating a System for Meeting the Fiber Requirements of Dairy Cows. Journal of Dairy Science. 80(7):1463-1481. doi:10.3168/jds.S0022-0302(97)76075-2).

In accordance with a particularly advantageous embodiment of the present invention, the second measurement step can be executed by means of a detection device arranged for detecting values of the second parameter P2 of the dose of cut forage. Advantageously, the detection device comprises a NIR spectrometer operating the near infrared spectrum.

Advantageously, the spectrometer comprises, in a manner per se known to the man skilled in the art, at least one transmitter arranged for emitting at least one radiation band, in particular with spectral band 900-1700 nm, intended to hit the analyzed dose of cut forage (or a sample of cut forage), and an optical receiver arranged for detecting the spectrum of a reflected radiation band coming from the dose of cut forage hit by the aforesaid radiation band. The spectrometer also comprises an operational unit, preferably provided with a computer, arranged for receiving the measurements of the spectrum of the reflected beam detected by the optical receiver and for calculating the aforesaid second parameter P2. Advantageously, the detection device, preferably the spectrometer, is used for detecting both the first parameter P1 and the second parameter P2.

Of course, without departing from the protective scope of the invention, the second parameter P2 or part of this can be measured also with other methods, e.g. by means of image analysis.

Advantageously, the process for cutting also comprises a second step of comparing the second parameter P2 with at least one predetermined threshold value S, identifying a magnitude relation of the second parameter P2 with the at least one threshold value S.

In particular, the second parameter P2 can be greater, smaller or equal to the threshold value S. In the event in which the second parameter P2 is the physically effective fiber (peNDF) fraction of the dose of cut forage, the threshold value S is for example a value comprised between 15 and 25%, preferably 21%.

Advantageously, the process also comprises a decision step in which the dose of cut forage is associated with a work index corresponding to the magnitude relation identified in the second comparison step. In particular, the work index is indicative of an action to be completed in relation to the cutting of the dose of forage.

In particular, with the term "work index" it is intended any type of indication or signal, associated with the magnitude relation identified between the second parameter P2 and the threshold value S, which carries decisional information with regard to the actions to be completed on the dose of cut forage, such as for example the continuation of the first cutting step, the stop of the operations or the modification of the target cutting length. Preferably, the actions to be completed in relation to the cutting of the dose of forage are aimed such that the second parameter P2, in particular the physically effective fiber (peNDF) fraction, is greater than the threshold value S.

Advantageously, at least one action to be completed in relation to the cutting of the dose of forage associated with the aforesaid work index corresponds to a modification of the target cutting length Lf in order to obtain a modified cutting length Lm. In particular, the process advantageously comprises a second step of setting the modified cutting length Lm in the cutting apparatus.

In addition, the process comprises advantageously a second cutting step, in which the cutting apparatus set with the modified cutting length Lm is actuated with the dose of cut forage at its interior.

In this manner, it is advantageously possible to also control that the length of the fiber is sufficiently long to ensure a satisfactory ruminant activity.

In accordance with the preferred embodiment, the cutting process also comprises a control step, preferably executed during the first cutting step and/or during the second cutting step, which provides for determining a third parameter P3 indicative of the length of the fiber of the dose of cut forage, in particular a value of mean length of the fiber of the forage. For example, the third parameter P3 can be calculated by means of the use of a sieve, or by means of image analysis techniques, or by means of NIR spectroscopy.

In addition, the control step advantageously provides for comparing the third parameter P3 with the target cutting length Lf and/or with the modified cutting length Lm that are set. In particular, the control step provides for stopping the first cutting step and/or the second cutting step when the third parameter P3 is substantially equal respectively to the target cutting length Lf and/or to the modified cutting length Lm that are set.

In this manner, it is possible to control that the objectives of target cutting length or modified cutting length Lf, Lm are reached.

The process, object of the invention, advantageously allows, based on the qualitative and quantitative characteristics of several parameters characterizing the fiber, the optimal forage cutting selection, with an action of final control on the size of the fiber of the food or unifeed mixture. In accordance with such process, the desirable final value of pef is therefore relative to the type and quality of the fiber administered with the food.

In addition, the process can advantageously be automated with reverse control on the cutting apparatus, e.g. on the mill set for the cutting or on the mixer wagon.

Advantageously, the process, object of the invention, can be implemented by any automated system comprising one or more detection devices, configured in order to determine the first, the second and/or the third parameter P1, P2, P3, and a logic control unit placed in data connection with such detection devices and configured with suitable modules for executing at least the first comparison step and the first setting step and preferably also the second comparison step and the second setting step.

The automated system can for example be mounted on a loading and feeding system for mixer wagons or on a mixer wagon itself, or on a forage cutting mill. For example, at least one detection device can be mounted at the loading arm of a mixer wagon in order to determine the first parameter of the dose of forage loaded on the mixer wagon. In addition, the logic control unit can be in data communication with suitable actuators connected to the screws of the mixer wagon in order to drive them to rotate for a set time so to obtain a specific target cutting length Lf of the dose of forage.

The invention thus described therefore attains the pre-established objects.

## Claims

1. Process for cutting a forage for animal feed, said process comprising:
- a step of arranging at least one dose of forage belonging to a plant family; said plant family being associated with at least one predetermined discrimination value (D), which defines at least one first composition interval (I1), with at least one predetermined first cutting length (L1) associated therewith, and at least one second composition interval (I2), with at least one predetermined second cutting length (L2) associated therewith;
- a first step of measuring said dose of forage in order to determine a first parameter (P1) indicative of the quantity of indigestible fiber contained in said dose of forage;
- a first step of comparing said first parameter (P1) with said predetermined discrimination value (D), in which:
- with said first parameter (P1) in said first composition interval (I1), said first cutting length (L1) is selected; and
- with said first parameter (P1) in said second composition interval (I2), said second cutting length (L2) is selected;
- a first step of setting a target cutting length (Lf) in a cutting apparatus; said target cutting length (Lf) being determined as a function of at least one from between said first cutting length (L1) and said second cutting length (L2) selected in said first comparison step;
- a first cutting step, in which said cutting apparatus is actuated with said
dose of forage at its interior in order to obtain a dose of cut forage said process being **characterized in** the it further comprises at least one sampling step, in which a plurality of forage samples is identified and/or picked up from said at least one dose of forage;
wherein said first measurement step and said first comparison step are executed on each forage sample of said plurality of forage samples in order to obtain a corresponding plurality of selected cutting lengths (L1, L2);
wherein said target cutting length (Lf) is calculated as a statistical function of said plurality of selected cutting lengths (L1, L2).

2. Process according to claim 1, **characterized in that** said first parameter (P1) in said first measurement step is selected from among:
- ratio between alpha-amylase-treated neutral detergent fiber (aNDF) fraction and lignin fraction contained in said dose of forage;
- 240 hours undigested neutral detergent fiber (uNDF240) fraction in said dose of forage;
- leaf-to-stem ratio of said dose of forage; and
- combinations thereof.

3. Process according to claim 1 or 2, **characterized in that** said plant family is one between leguminous and gramineous.

4. Process according to claim 3, **characterized in that** said plant family is leguminous;
wherein said first cutting length (L1) is at least smaller than 30 mm and said second cutting length (L2) is at least greater than 30 mm.

5. Process according to claim 3, **characterized in that** said plant family is gramineous;
wherein said first cutting length (L1) is at least smaller than 35 mm and said second cutting length (L2) is at least greater than 35 mm.

6. Process according to any one of the preceding claims, **characterized in that** it also comprises:
- a second step of measuring said dose of cut forage in order to determine a second parameter (P2) indicative of the quantity of physically effective fiber in said dose of cut forage;
- a second step of comparing said second parameter (P2) with at least one predetermined threshold value (S); identifying a magnitude relation of said second parameter (P2) with said at least one threshold value (S);
- a decision step, in which one said dose of cut forage is associated with a work index corresponding to the magnitude relation identified in said second comparison step;
wherein said work index is indicative of an action to be completed in relation to the cutting of said dose of cut forage.

7. Process according to claim 6, **characterized in that** said second parameter (P2) in said second measurement step is the physically effective fiber (peNDF) fraction of said dose of cut forage.

8. Process according to claim 6 or 7, **characterized in that** said action to be completed associated with said work index is selected from among: continuation of said first cutting step, stop of said first cutting step, modification of said target cutting length.

9. Process according to claim 8, **characterized in that** said action to be completed associated with said work index corresponds to a modification of the target cutting length in order to obtain a modified cutting length (Lm).

10. Process according to claim 9, **characterized in that** it also comprises:
- a second step of setting said modified cutting length (Lm) in said cutting apparatus;
- a second cutting step, in which said cutting apparatus set with said modified cutting length (Lm) is actuated with said dose of cut forage at its interior.

11. Process according to any one of the preceding claims, **characterized in that**:
- in said arrangement step, multiple said doses of forage are arranged, each belonging to a corresponding plant family;
- in said sampling step, at least one forage sample is identified and/or picked up from each of said doses of forage.

12. Process according to claim 11, **characterized in that** said doses of forage belong to different plant families.

13. Process according to claim 11 or 12, **characterized in that** said first cutting step is executed on a mixture of forages comprising said multiple doses of forage.

## Patentansprüche

1. Verfahren zum Schneiden von Futter für Tierfutter, wobei das genannte Verfahren Folgendes umfasst:
- einen Schritt des Anordnens mindestens einer Dosis von zu einer Pflanzenfamilie gehörendem Futter; wobei die genannte Pflanzenfamilie mit mindestens einem vorgegebenen Unterscheidungswert (D) verknüpft ist, der mindestens ein erstes Zusammensetzungsintervall (I1) mit mindestens einer, vorgegebenen ersten Schnittlänge (L1), und mindestens ein zweites Zusammensetzungsintervall (I2) mit mindestens einer damit verknüpften, vorgegebenen zweiten Schnittlänge (L2), definiert;
- einen ersten Schritt des Messens der genannten Dosis Futter, um einen ersten Parameter (P1) zu bestimmen, der die in der genannten Dosis Futter enthaltene Menge an unverdaulicher Faser angibt;
- einen ersten Schritt des Vergleichs des genannten ersten Parameters (P1) mit dem genannten vorgegebenen Unterscheidungswert (D), bei dem:
- mit dem genannten ersten Parameter (P1) in dem genannten ersten Zusammensetzungsintervall (I1) die genannte erste Schnittlänge (L1) ausgewählt wird; und
- mit dem genannten ersten Parameter (P1) in dem genannten zweiten Zusammensetzungsintervall (I2) die genannte zweite Schnittlänge (L2) ausgewählt wird;
- einen ersten Schritt des Einstellens einer Zielschnittlänge (Lf) in einer Schneidevorrichtung; wobei die genannte Zielschnittlänge (Lf) in Abhängigkeit von mindestens einer unter der genannten ersten Schnittlänge (L1) und der genannten zweiten Schnittlänge (L2) bestimmt wird, die bei dem genannten ersten Vergleichsschritt gewählt werden;
- einen ersten Schneideschritt, bei dem die genannte Schneidevorrichtung mit der genannten Dosis Futter in ihrem Inneren in Betrieb gesetzt wird, um eine Dosis geschnittenen Futters zu erhalten
wobei das genannte Verfahren **dadurch gekennzeichnet ist, dass** es mindestens einen Probenahmeschritt weiter umfasst, bei dem eine Vielzahl von Futterproben ermittelt und/oder aus der genannten mindestens einen Dosis Futter entnommen wird;
wobei der genannte erste Messschritt und der genannte erste Vergleichsschritt an jeder Futterprobe der genannten Vielzahl von Futterproben ausgeführt werden, um eine entsprechende Vielzahl von ausgewählten Schnittlängen (L1, L2) zu erhalten; wobei die genannte Zielschnittlänge (Lf) als eine statistische Funktion der genannten Vielzahl von gewählten Schnittlängen (L1, L2) berechnet wird.

2. Verfahren nach Anspruch 1, **dadurch gekennzeichnet, dass** der genannte erste Parameter (P1) bei dem genannten ersten Messschritt ausgewählt wird aus:
- Verhältnis zwischen der Fraktion der mit Alpha-Amylase behandelten Neutral-Detergenzien-Faser (aNDF) und der Ligninfraktion, die in der genannten Dosis Futter enthalten ist;
- Fraktion der nach 240 Stunden unverdautlichern Neutral-Detergenzien-Faser (uNDF240) in der genannten Dosis Futter;
- Blatt-Stängel-Verhältnis der genannten Dosis Futter; und
- Kombinationen davon.

3. Verfahren nach Anspruch 1 oder 2, **dadurch gekennzeichnet, dass** die genannte Pflanzenfamilie eine unter Leguminosen und Gramineen ist.

4. Verfahren nach Anspruch 3, **dadurch gekennzeichnet, dass** die genannte Pflanzenfamilie die der Leguminosen ist;
wobei die genannte erste Schnittlänge (L1) mindestens kleiner als 30 mm ist und die genannte zweite Schnittlänge (L2) mindestens größer als 30 mm ist.

5. Verfahren nach Anspruch 3, **dadurch gekennzeichnet, dass** die genannte Pflanzenfamilie die der Gramineen ist;
wobei die genannte erste Schnittlänge (L1) mindestens kleiner als 35 mm ist und die genannte zweite Schnittlänge (L2) mindestens größer als 35 mm ist.

6. Verfahren nach einem beliebigen der vorangegangenen Ansprüche, **dadurch gekennzeichnet, dass** es Folgendes weiter umfasst:
- einen zweiten Schritt des Messens der genannten Dosis geschnittenen Futters, um einen zweiten Parameter (P2) zu bestimmen, der die Menge der physikalisch wirksamen Faser in der genannten Dosis geschnittenen Futters angibt;
- einen zweiten Schritt des Vergleichens des genannten zweiten Parameters (P2) mit mindestens einem vorgegebenen Schwellenwert (S); Ermitteln einer Größenbeziehung des genannten zweiten Parameters (P2) mit dem genannten mindestens einen Schwellenwert (S);
- einen Entscheidungsschritt, bei dem eine genannte Dosis geschnittenen Futters mit einem Arbeitsindex verknüpft wird, der dem in dem genannten zweiten Vergleichsschritt ermittelten Größenverhältnis entspricht;
wobei der genannte Arbeitsindex auf einen Vorgang hinweist, der in Bezug auf das Schneiden der genannten Dosis geschnittenen Futters auszuführen ist.

7. Verfahren nach Anspruch 6, **dadurch gekennzeichnet, dass** der genannte zweite Parameter (P2) bei dem genannten zweiten Messschritt die Fraktion der physikalisch wirksamen Faser (peNDF) der genannten Dosis geschnittenen Futters ist.

8. Verfahren nach Anspruch 6 oder 7, **dadurch gekennzeichnet, dass** der genannte auszuführende Vorgang, der mit dem genannten Arbeitsindex verknüpft ist, ausgewählt wird aus: Fortsetzung des genannten ersten Schneideschrittes, Stoppen des genannten ersten Schneideschrittes, Änderung der genannten Zielschnittlänge.

9. Verfahren nach Anspruch 8, **dadurch gekennzeichnet, dass** der mit dem genannten Arbeitsindex verbundene genannte auszuführende Vorgang einer Änderung der Zielschnittlänge entspricht, um eine geänderte Schnittlänge (Lm) zu erhalten.

10. Verfahren nach Anspruch 9, **dadurch gekennzeichnet, dass** es Folgendes weiter umfasst:
- einen zweiten Schritt der Einstellung der genannten geänderten Schnittlänge (Lm) in der genannten Schneidevorrichtung;
- einen zweiten Schneideschritt, bei dem die mit der genannten geänderten Schnittlänge (Lm) eingestellte Schneidevorrichtung mit der genannten Dosis geschnittenen Futters in ihrem Inneren in Betrieb gesetzt wird.

11. Verfahren nach einem beliebigen der vorangegangenen Ansprüche, **dadurch gekennzeichnet, dass**:
- bei dem genannten Anordnungsschritt mehrere genannte Dosen von Futter angeordnet werden, die jeweils zu einer entsprechenden Pflanzenfamilie gehören;
- bei dem genannten Probenahmeschritt mindestens eine Futterprobe ermittelt und/oder aus jeder der genannten Dosen Futter entnommen wird.

12. Verfahren nach Anspruch 11, **dadurch gekennzeichnet, dass** die genannten Dosen Futter zu verschiedenen Pflanzenfamilien gehören.

13. Verfahren nach Anspruch 11 oder 12, **dadurch gekennzeichnet, dass** der genannte erste Schneideschritt mit einer Mischung von Futtern durchgeführt wird, die die genannte Vielzahl von Dosen Futter enthält.

## Revendications

1. Procédé de découpe d'un fourrage pour l'alimentation animale, ledit procédé comprenant :
- une étape de disposition d'au moins une dose de fourrage appartenant à une famille de plantes ; ladite famille de plantes étant associée à au moins une valeur de discrimination (D) prédéterminée, qui définit au moins un premier intervalle de composition (I1), avec au moins une première longueur de découpe (L1) prédéterminée associée à celui-ci, et au moins un second intervalle de composition (I2), avec au moins une seconde longueur de découpe prédéterminée (L2) associée à celui-ci ;
- une première étape de mesure de ladite dose de fourrage afin de déterminer un premier paramètre (P1) indiquant la quantité de fibres indigestes contenues dans ladite dose de fourrage ;
- une première étape de comparaison dudit premier paramètre (P1) à ladite valeur de discrimination prédéterminée (D), dans laquelle :
- avec ledit premier paramètre (P1) dans ledit premier intervalle de composition (I1), ladite première longueur de découpe (L1) est sélectionnée ; et
- avec ledit premier paramètre (P1) dans ledit second intervalle de composition (I2), ladite seconde longueur de découpe (L2) est sélectionnée ;
- une première étape de réglage d'une longueur de découpe cible (Lf) dans un appareil de découpe ; ladite longueur de découpe cible (Lf) étant déterminée en fonction d'au moins une de ladite première longueur de découpe (L1) et de ladite seconde longueur de découpe (L2) sélectionnée dans ladite première étape de comparaison ;
- une première étape de découpe, dans laquelle ledit appareil de découpe est actionné avec ladite dose de fourrage à l'intérieur de celui-ci afin d'obtenir une dose de fourrage découpée
ledit procédé étant **caractérisé en ce qu'**il comprend en outre au moins une étape d'échantillonnage, dans laquelle une pluralité d'échantillons de fourrage sont identifiés et/ou prélevés de ladite au moins une dose de fourrage ;
où ladite première étape de mesure et ladite première étape de comparaison sont exécutées sur chaque échantillon de fourrage de ladite pluralité d'échantillons de fourrage afin d'obtenir une pluralité correspondante de longueurs de découpe (L1, L2) sélectionnées ;
ladite longueur de découpe cible (Lf) étant calculée comme une fonction statistique de ladite pluralité de longueurs de découpe (L1, L2) sélectionnées.

2. Procédé selon la revendication 1, **caractérisé en ce que** ledit premier paramètre (P1) dans ladite première étape de mesure est sélectionné parmi :
- le rapport entre la fraction de fibre détergente neutre traitée avec l'alpha-amylase (aNDF) et la fraction de lignine contenue dans ladite dose de fourrage ;
- la fraction de fibre détergente neutre non digérée après 240 heures (uNDF240) dans ladite dose de fourrage ;
- le rapport feuille/tige de ladite dose de fourrage ; et
- des combinaisons de ceux-ci.

3. Procédé selon la revendication 1 ou 2, **caractérisé en ce que** ladite famille de plantes est l'une entre les légumineuses et les graminées.

4. Procédé selon la revendication 3, **caractérisé en ce que** ladite famille de plantes est celle des légumineuses ;
où ladite première longueur de découpe (L1) est au moins inférieure à 30 mm et ladite seconde longueur de découpe (L2) est au moins supérieure à 30 mm.

5. Procédé selon la revendication 3, **caractérisé en ce que** ladite famille de plantes est la famille des graminées ;
où ladite première longueur de découpe (L1) est au moins inférieure à 35 mm et ladite seconde longueur de découpe (L2) est au moins supérieure à 35 mm.

6. Procédé selon l'une quelconque des revendications précédentes, **caractérisé en ce qu'**il comprend également :
- une seconde étape de mesure de ladite dose de fourrage découpé afin de déterminer un second paramètre (P2) indiquant la quantité de fibres physiquement efficaces dans ladite dose de fourrage découpé ;
- une seconde étape de comparaison dudit second paramètre (P2) à au moins une valeur seuil prédéterminée (S) ; d'identification d'une relation d'amplitude dudit second paramètre (P2) avec ladite au moins une valeur seuil (S) ;
- une étape de décision, dans laquelle une dite dose de fourrage découpé est associée à un indice de travail correspondant à la relation d'amplitude identifiée dans la seconde étape de comparaison ;
où ledit indice de travail indique une action à accomplir en rapport avec la découpe de ladite dose de fourrage découpé.

7. Procédé selon la revendication 6, **caractérisé en ce que** ledit second paramètre (P2) dans ladite seconde étape de mesure est la fraction de fibres physiquement efficaces (peNDF) de ladite dose de fourrage découpé.

8. Procédé selon la revendication 6 ou 7, **caractérisé en ce que** ladite action à accomplir associée audit index de travail est sélectionnée parmi : la poursuite de ladite première étape de découpe, l'arrêt de ladite première étape de découpe, la modification de ladite longueur de découpe cible.

9. Procédé selon la revendication 8, **caractérisé en ce que** ladite action à accomplir associée audit index de travail correspond à une modification de la longueur de découpe cible afin d'obtenir une longueur de découpe modifiée (Lm).

10. Procédé selon la revendication 9, **caractérisé en ce qu'**il comprend également :
- une seconde étape de réglage de ladite longueur de découpe modifiée (Lm) dans ledit appareil de découpe ;
- une seconde étape de découpe, dans laquelle ledit appareil de découpe réglé sur ladite longueur de découpe modifiée (Lm) est actionné avec ladite dose de fourrage découpé à l'intérieur de celui-ci.

11. Procédé selon l'une quelconque des revendications précédentes, **caractérisé en ce que** :
- dans ladite étape de disposition, de multiples desdites doses de fourrage sont disposées, chacune appartenant à une famille de plantes correspondante ;
- dans ladite étape d'échantillonnage, au moins un échantillon de fourrage est identifié et/ou prélevé de chacune desdites doses de fourrage.

12. Procédé selon la revendication 11, **caractérisé en ce que** lesdites doses de fourrage appartiennent à différentes familles de plantes.

13. Procédé selon la revendication 11 ou 12, **caractérisé en ce que** ladite première étape de découpe est exécutée sur un mélange de fourrages comprenant lesdites multiples doses de fourrage.
